# EUROPÄISCHE PATENTSCHRIFT

(11) **EP 1 520 964 B1**
(45) Veröffentlichungstag und Bekanntmachung des Hinweises auf die Patenterteilung: **18.04.2007**
(21) Anmeldenummer: 04104683.0
(22) Anmeldetag: 27.09.2004
(51) Int. Cl.: F01N 3/029, F01N 3/023, C10L 10/06

(54) **Abgasstrang und Verfahren zur Regenerierung eines Russfilters**
Exhaust line and method for regenerating a soot filter
Ligne d'échappement et procédé de régénération d'un filtre à suie

(30) Priorität: 02.10.2003 DE 10345945
(43) Veröffentlichungstag der Anmeldung: 06.04.2005
(60) Teilanmeldung: 06118972.6
(73) Patentinhaber: ROBERT BOSCH GMBH, 70442 Stuttgart (DE)
(72) Erfinder: Breuer, Norbert, 71254 Ditzingen (DE); Widenmeyer, Markus, 71101 Schoenaich (DE)

(56) Entgegenhaltungen:
- DE-A- 4 100 780
- DE-C- 4 329 407
- US-A- 4 516 990
- US-A- 4 631 076
- US-A- 4 665 690

## Beschreibung

### Stand der Technik

Die Erfindung geht von einem Abgasstrang einer Brennkraftmaschine sowie von einem Verfahren zur Regenerierung eines Rußfilters gemäß der im Oberbegriff der unabhängigen Patentansprüche näher definierten Art aus.

Bei Brennkraftmaschinen, insbesondere bei Brennkraftmaschinen von Kraftfahrzeugen, bestehen hohe Anforderungen bezüglich ihrer Emissionen. Es ist daher stets ein Bestreben, effiziente Abgasreinigungsverfahren einzusetzen. Insbesondere bei Diesel-Brennkraftmaschinen ist es aus toxikologi sehen Gründen wünschenswert, dass das an die Umgebung abgegebene Abgas eine möglichst geringe Rußkonzentration aufweist. Hierzu kann der betreffende Abgasstrang mit einem mit entsprechenden Substraten ausgestatteten Rußfilter versehen sein.

Rußfilter haben jedoch nur eine begrenzte Aufnahmekapazität, so dass er bei einem bestimmten Füllgrad, welcher beispielsweise über eine an dem Rußfilter gemessene Druckdifferenz bestimmt werden kann, regeneriert werden muss. Die Regeneration kann beispielsweise durch Oxidation des abgelagerten Rußes mittels Abgassauerstoff erfolgen, der der Brennkraftmaschine im Überschuss zugeführt wird. Um die Oxidation auszulösen, muss an dem Rußfilter eine minimale Zündtemperatur erreicht werden. Oberhalb der Zündtemperatur kann die frei werdende Verbrennungsenergie des Rußes die Reaktion aufrecht erhalten.

Bei Diesel-Brennkraftmaschinen moderner Kraftfahrzeuge ist die Temperatur des betreffenden Abgases jedoch häufig zu niedrig, um eine thermische Regeneration einzuleiten. Es werden daher innermotorische Maßnahmen ergriffen, welche zu einer Erhöhung der Abgastemperatur führen. Diese können beispielsweise in der Veränderung des Einspritzverlaufs und/oder der Abgasrückführrate liegen, wobei es stets wünschenswert ist, dass die Fahrdynamik des betreffenden Kraftfahrzeuges nicht beeinträchtigt wird.

Alternativ oder auch zusätzlich ist es möglich, zur Erhöhung der Filtertemperatur nachmotorische Maßnahmen einzusetzen. Beispielsweise kann das in den Rußfilter einströmende Abgas oder der Rußfilter selbst elektrisch erhitzt werden. Auch ist es bekannt, sogenannte katalytische Brenner zur Erhöhung der Temperatur am Rußfilter einzusetzen.

All diese Maßnahmen zur Erhöhung der Temperatur sind mit einem zusätzlichen Energieaufwand verbunden.

Ein weiteres Problem bei der Regeneration von Rußfiltern stellt die Temperaturkontrolle dar. So kann es nach Überschreiten der für die Oxidation des Rußes erforderlichen Zündtemperatur zu einer selbstständigen Verstärkung der Reaktion kommen, die zu einer deutlichen Erhöhung der Temperatur des jeweiligen Rußfilters führt, was gegebenenfalls zu einer irreversiblen Schädigung der Struktur des Rußfilters führen kann.

Um den verfahrenstechnischen Aufwand bei der Oxidation des am Rußfilter abgelagerten Rußes zu verringern und gleichzeitig die Gefahr einer Schädigung der Filterstruktur zu verringern, ist ein Verfahren bekannt, bei welchem dem Kraftstoff, der zur Verbrennung in die Brennkraftmaschine geführt wird, ein Additiv zuzugeben, das in dem Abgasstrang am Rußfilter dafür sorgt, dass die zur Regeneration des Rußfilters erforderliche Temperatur signifikant gesenkt wird. Das Additiv wirkt also als Katalysator.

Die bisher bekannten Additive sind so aufgebaut, dass sie ein Metallatom umfassen, welches einen Komplex mit organischen Liganden bildet, die das Metallatom vor einer Oxidation schützen und die es ermöglichen, die Additive in dem Dieselkraftstoff in Lösung zu halten. Bei der Verbrennung des Kraftstoffes in der Brennkraftmaschine wird die organische Schutzstruktur zerstört. Das Metallatom bzw. dessen Oxid wird in die Struktur der bei der Verbrennung erzeugten Rußpartikel eingebaut und wirkt dann bei der Regeneration des Rußfilters als hochdisperser Katalysator, der eine Oxidation des Rußes erheblich beschleunigt.

Nach der Regeneration des Rußfilters fällt an dem Rußfilter eine sogenannte Filterasche an, in welcher das als Katalysator eingesetzte Metall in Form eines Oxides oder auch in Form eines Salzes, beispielsweise als Sulfat, enthalten ist. Die Filterasche kann nicht durch thermische Regenerationsverfahren beseitigt werden. Vielmehr führt die Filterasche zu einem stetigen Ansteigen eines sogenannten Abgasgegendrucks, was wiederum zu einer begrenzten Einsatzdauer des Rußfilters führt.

Bei der Auswahl des in dem Additiv enthaltenen, als Katalysator wirkenden Metalls ist darauf zu achten, dass sich bei der Umsetzung in der Brennkraftmaschine keine nachteiligen Sekundäreigenschaften, beispielsweise eine änderung einer Motorölqualität oder eine Ablagerung von Verkokungsprodukten, einstellen. Beispiele für bisher eingesetzte Metalle sind Cer oder Eisen. Die anfallenden Mengen an Additivasche in der Filterasche liegen dabei bisher bei 100 mg Cer bzw. 35 mg Eisen pro Kilogramm Kraftstoff, der in der Brennkraftmaschine verbrannt wurde.

Katalysatoren höherer Aktivität, wie beispielsweise Platin, können bisher nicht eingesetzt werden, da deren in dem Kraftstoff löslichen Verbindungen als toxikologisch bedenklich eingestuft werden.

In diesem Zusammenhang ist aus der US 4,665,690 bekannt, das Abgassystem eines Verbrennungsmotors, in das ein Partikelfilter integriert ist, mit einer Zuführvorrichtung für eine katalytisch aktive Substanz zu versehen, die zwischen Verbrennungsmotor und Partikelfilter dem Abgas zugesetzt wird.

### Vorteile der Erfindung

Der erfindungsgemäße Abgasstrang einer Brennkraftmaschine, insbesondere einer Diesel-Brennkraftmaschine, mit den Merkmalen nach dem Oberbegriff des Patentanspruches 1, bei welchem Abgasstrang die Einrichtung zur Regeneration des Rußfilters eine Aufbereitungseinheit umfasst, mittels der ein einen Katalysator für die Regeneration umfassendes Additiv oder ein Umsetzungsprodukt desselben stromab der Brennkraftmaschine und stromauf des Rußfilters in den Abgasstrang eintragbar ist, hat den Vorteil, dass das Additiv nicht durch die Brennkraftmaschine geführt wird, so dass die durch die Brennkraftmaschine gegebenen Restriktionen hinsichtlich der Auswahl des Additivs entfallen.

Vielmehr ist es möglich, Additive, wie Edelmetalle, einzusetzen, die bei der Oxidation von Ruß in dem Rußfilter eine erheblich höhere katalytische Aktivität als die bisher dem Kraftstoff für die Brennkraftmaschine und damit auch der Brennkraftmaschine zugeführten Additive aufweisen, die bei einer Umwandlung im Brennraum der Brennkraftmaschine zu einer Verkokung von Düsen oder Ventilen führen könnten, wie es bei Katalysatoren auf Basis von Elementen der Eisenmetallgruppe der Fall wäre.

Das Additiv, das den Katalysator selbst oder einen Precursor desselben bildet, sollte so ausgewählt werden, dass keine toxikologischen Bedenken bestehen. Ferner sollte durch die Auswahl sichergestellt sein, dass durch den Katalysator keine Poren des Rußfilters verstopft werden, was einen raschen Anstieg des Abgasgegendrucks zur Folge hätte.

Der Ort der Eindosierung des katalytisch wirksamen Stoffes in den Abgasstrang liegt beispielsweise im Krümmerbereich, stromab eines Turboladers oder stromab eines Dieseloxidationskatalysators.

Bei einer bevorzugten Ausführungsform des Abgasstrangs nach der Erfindung weist die in dem Abgasstrang oder außerhalb des Abgasstrangs angeordnete Aufbereitungseinheit für das Additiv, das zweckmäßigerweise in einem Vorratsbehälter vorgehalten wird, eine Dosiereinrichtung auf, mittels der definierte Mengen des Additivs bzw. eines Umsetzungsprodukts desselben bedarfsgerecht in den Abgasstrang eintragbar sind.

Mittels der Dosiereinrichtung, die mit einer Steuereinheit verbunden sein kann, ist es insbesondere möglich, das Additiv bzw. dessen Umsetzungsprodukt unabhängig vom Lastzustand der Brennkraftmaschine und insbesondere diskontinuierlich in den Abgasstrang einzutragen.

So ist es beispielsweise möglich, das Additiv in Abhängigkeit von der Konzentration an Ruß in dem betreffenden Abgas oder auch in Abhängigkeit von einem sogenannten Abgasgegendruck in den Abgasstrang einzutragen.

Insbesondere kann ein Additiv, das selbst den Katalysator darstellt, bzw. ein den Katalysator darstellendes Umsetzungsprodukt des Additivs mittels der Dosiereinrichtung unabhängig vom Lastzustand der Brennkraftmaschine in solch geringen Mengen in dem Abgasstrang eindosiert werden, dass nur geringe Mengen an Additivasche entstehen, welche die Lebensdauer des Rußfilters begrenzt.

Dies gilt insbesondere für die Verwendung hochaktiver, aus einem Edelmetall wie Platin bestehender Katalysatoren, die aufgrund einer geringeren additivbedingten Filterveraschung zu einer erheblichen Erhöhung der Laufleistung des Rußfilters führen, was wiederum zu einer hohen Attraktivität des Abgasstrangs nach der Erfindung sowie zu geringeren Betriebskosten des betreffenden Kraftfahrzeuges führt.

Die Eindosierung des Additivs bzw. von dessen Umsetzungsprodukt kann auf unterschiedliche Weise erfolgen. So ist beispielsweise eine kontinuierliche Eindosierung gleichbleibender Rate oder auch mit einer Rate möglich, die mit der anfallenden Partikelrohemission korreliert ist, die sich also aus der von der Brennkraftmaschine abgegebenen Rußkonzentration errechnet. Die Ermittlung der Rußkonzentration kann entweder durch einen in dem Abgasstrang angeordneten Rußsensor oder gemäß eines motorlastabhängigen Kennfeldmodells erfolgen, das durch eine elektronische Motorsteuerung vorgegeben wird.

Bei einer diskontinuierlichen Eindosierung des Additivs bzw. von dessen Umsetzungsprodukt ist es denkbar, dass eine Zudosierung in Phasen erfolgt, in denen das betreffende Abgas eine hohe Rußkonzentration hat, oder auch in Phasen, in denen eine hohe Beladung des Rußfilters mit Ruß diagnostiziert wird. Zur Diagnostizierung der Rußbeladung des Rußfilters kann entweder ein Sensor oder auch ein Filterbeladungsmodell herangezogen werden.

Ferner ist es denkbar, dass eine Eindosierung in festen Zeit- und/oder Entfernungsintervallen, beispielsweise alle tausend Fahrkilometer des betreffenden Kraftfahrzeuges, erfolgt. Auch können sich die Intervalle aus der Menge an Ruß ergeben, die bei Betrieb der Brennkraftmaschine auf dem Rußfilter abgeschieden wird.

Die Eindosierung kann auch so erfolgen, dass der Katalysator, der zusammen mit dem Ruß auf dem Rußfilter abgeschieden wird, seine Konzentration schichtweise ändert.

Die Eindosierung kann auch in Abhängigkeit von einem Abgasvolumenstrom, einer Abgastemperatur, einer Drehzahl der Brennkraftmaschine oder einem von der Brennkraftmaschine ausgeübten Drehmoment erfolgen, und zwar beispielsweise in Phasen, in denen durch den Betrieb der Brennkraftmaschine im Zusammenwirken mit dem Additiv eine Filterregeneration ermöglicht wird oder auch in Schwachlastphasen, beispielsweise in Leerlaufphasen, in denen ein geringer Abgasvolumenstrom anfällt.

Auch kann die Zudosierung von weiteren Parametern abhängig sein, insbesondere wenn die Aufbereitungseinheit auch für andere Zwecke, beispielsweise für eine Fahrgastzellenheizung oder eine Standklimaanlage, eingesetzt wird.

Des Weiteren umfasst eine spezielle Ausführungsform des Abgasstrangs nach der Erfindung ein Filtermanagementsystem, mit dem die Aufbereitungseinheit zusammenwirkt. Das Filtermanagementsystem kann dazu dienen, eine Eindosierung auszulösen und hierzu unmittelbar vor einer erforderlichen Regeneration des Rußfilters die Aufbereitungseinheit in Betrieb zu setzen.

Auch kann das Filtermanagementsystem einen Brenner in Betrieb setzen, der zur Regeneration des Rußfilters dient und bei einer speziellen Ausführungsform des Abgasstrangs nach der Erfindung auch zur Umsetzung des Additivs eingesetzt wird, so dass gleichzeitig eine zur Regeneration erforderliche Temperaturerhöhung an dem Rußfilter und eine zur Umsetzung des Additivs erforderliche Temperaturerhöhung stromauf des Rußfilters stattfindet.

Es ist denkbar, das den katalytischen Stoff oder einen Precursor desselben bildende Additiv oder dessen Folgeprodukt separat oder bei einer speziellen Ausführungsform auch zusammen mit weiteren, nachmotorisch zudosierten Substanzen, wie Harnstoff, eine Harnstoffwasserlösung, Ammoniak, oder dergleichen einzudosieren. Eine separate Eindosierung des Additivs hat jedoch den Vorteil einer besseren Dosierbarkeit.

Wenn es erforderlich ist, dass das Additiv vor dem Eintrag in das in dem Abgasstrang strömende Abgas in eine katalytisch aktive Struktur umgesetzt wird, ist es zweckmäßig, wenn die Aufbereitungseinheit eine Umsetzungseinrichtung für das Additiv umfasst.

In der Umsetzungseinrichtung können beispielsweise organische Schutzstrukturen des bei der Rußfilterregeneration katalytisch wirksamen Stoffes zerstört werden. Die Umsetzung kann durch Verbrennung, Thermolyse, Reformieren oder andere Reaktionsarten erfolgen. Wenn beispielsweise das Additiv in einem flüssigen Medium vorliegt, ist es zweckmäßig, ein Heizelement einzusetzen, mittels dessen eine Verdampfung des flüssigen Mediums erfolgt, so dass der Katalysator, den das Additiv umfasst, sich nach der Eindosierung in den Abgasstrang auf den Rußpartikeln des betreffenden Abgases anlagert und zusammen mit diesen auf dem Rußfilter abgelagert wird.

Es kann auch ein Zusatzbrenner vorgesehen sein, der ein Gemisch aus dem Additiv und einem Kraftstoff verbrennt und dessen Verbrennungsgase dem Abgasstrang an einer geeigneten Stelle zwischen der Brennkraftmaschine und dem Rußfilter zugeführt werden. Eine Speicherung des Kraftstoff/Additiv-Gemisches kann in einem entsprechenden Tank erfolgen.

Es ist aber auch denkbar, das Additiv separat in einem Vorratsbehälter zu speichern und erst unmittelbar vor der Aufbereitung in einem Mischer mit Kraftstoff zu mischen, der aus dem herkömmlichen Kraftstofftank des betreffenden Kraftfahrzeuges herangeführt wird. Hierbei kann eine kontinuierliche Mischung des Kraftstoffes und des Additivs oder auch eine bedarfsgerechte Anpassung des Mischungsverhältnisses erfolgen. Beispielsweise kann die Konzentration an Additiv direkt vor Einleitung der Regeneration des Rußfilters erhöht werden. Auch kann die Steuerung so erfolgen, dass die Konzentration an dem Additiv zu Beginn der Eindosierung in den Abgasstrang besonders hoch ist.

Wenn das Additiv und das flüssige Medium erst unmittelbar vor dem Einströmen in die Umsetzungseinheit gemischt werden, besteht der Vorteil, dass die Mischung selbst nicht lagerfähig sein muss. Das flüssige Medium wird dann beispielsweise in der Umsetzungseinrichtung umgesetzt.

Die Heizenergie des Zusatzbrenners, der im Abgasstrom oder einem Abgasteilstrom angeordnet sein kann, kann zum Aufheizen des Abgasstrangs oder auch durch geeignete apparative Verschaltung im Bedarfsfall als Heizquelle für eine Fahr gastzelle eingesetzt werden.

Das Additiv bzw. das katalytisch wirksame Material kann grundsätzlich gasförmig in den Abgasstrom eindosiert werden. Bei einem gasförmig, in den Abgasstrom eindosierten Additiv ist es erforderlich, dass dieses an dem Rußfilter katalytisch wirkt oder sich in dem Abgasstrang oder in der Umsetzungseinrichtung in einen katalytisch wirksamen Stoff umwandelt. Als Gas kann beispielsweise ein Silan, wie Tetramethylsilan, eingesetzt werden. Die Aufbereitungseinheit umfasst dann zweckmäßigerweise eine Gaskartusche. In dem Abgasstrang oder in der Umsetzungseinrichtung erfolgt eine Umwandlung des Gases in einen Feststoff, der sich an den Rußpartikeln anlagern kann.

Wenn das Additiv in flüssiger Form in einem Kraftstoff gelöst vorliegt, kann es beispielsweise auch Metallatome, wie Kupfer, Platin oder Silber, umfassen, die mit organischen Liganden einen Komplex bilden, die in der Umsetzungseinrichtung zerstört werden, so dass sich die Metallatome als katalytisch aktive Zentren auf den Rußpartikeln des Abgases anlagern können.

Bei den eingesetzten Additiven kann es sich insbesondere auch um Verbindungen handeln, die in Dieselkraftstoff lösbar sind und einen Komplex auf der Basis von Cer- oder Eisen-Metallkernen bilden.

Denkbar ist es natürlich auch, Additive mit anderen aktiven Metallkernen, beispielsweise aus Kupfer, Platin oder Silber einzusetzen, die durch einen organischen Komplex geschützt sind, der eine Löslichkeit im Kraftstoff ermöglicht. Als Lösungsmittel kann alternativ zu Kraftstoff auch Wasser oder ein anderes organisches Lösungsmittel, wie ein Alkohol, eingesetzt werden, wobei eine Komplexierung der Additive insbesondere durch polare Verbindungen erfolgen kann.

Des Weiteren kann es sich bei den eingesetzten Additiven um Metallkolloide handeln, die in unstabilisierter Form oder durch Liganden stabilisiert vorliegen können und die in Lösung gehalten werden, wobei durch eine Verbrennung in der Umsetzungseinrichtung eine zumindest teilweise Verdampfung erfolgt.

Auch kann es sich bei den Additiven um Kolloide aus Metall- salzen, wie Nitraten, oder aus Metalloxiden, beispielsweise aus Ceroxid, handeln, welche durch Liganden stabilisiert oder in unstabilisierter Form vorliegen können. Die Kolloide erfahren durch ihre Verbrennung oder eine anderweitige chemische Umsetzung in der Aufbereitungseinheit eine Umwandlung in eine katalytisch aktive Form. Insbesondere erfolgt in der Aufbereitungseinheit eine chemische bzw. strukturelle Umwandlung der Kolloide.

Das Additiv kann auch in einem wässrigen Gemisch enthalten sein, das in der Aufbereitungseinrichtung beispielsweise mittels einer Reformierungseinrichtung oder durch Desorption von den katalytischen Stoff schützenden Liganden aufbereitet wird.

Auch ist es denkbar, den als fertigen Katalysator vorliegenden Feststoff, wie beispielsweise Silber, in einem tiegelartigen Vorratsbehälter vorzuhalten und mittels einer Heizeinrichtung soweit zu erwärmen, dass der Dampfdruck so hoch ist, dass das Abgas mit dem Dampf des Feststoffes versehen wird. Der Feststoff kann auch in geschmolzener Form in dem Vorratsbehälter vorgehalten und in den Abgasstrang eingedampft werden. Silber schmilzt beispielsweise bei 962 °C und hat bei 900 °C einen Dampfdruck von etwa 0,01 mbar. Bei Sättigung des Abgases mit Silberdampf ist eine theoretische Silberkonzentration von etwa 1 ppm zu erwarten, was etwa der Menge an Additiv bei herkömmlichen Verfahren entspricht. Silber hat eine höhere katalytische Aktivität als beispielsweise bisher eingesetzte Cer- oder Eisenoxide. Daher ist auch bei einer maximalen motorischen Partikelemission bereits eine kleinere eindosierte Silbermenge ausreichend. Unter den Voraussetzungen des herkömmlichen Verfahrens beträgt die anfallende Silbermenge bei einer Fahrleistung des betreffenden Kraftfahrzeuges von 200000 km etwa 200 g.

Aufgrund der höheren Aktivität von Silber und einer der Partikelrohemission angepassten Dosierung kann die Silbermenge bei Einsatz des Abgasstrangs gemäß der Erfindung um etwa eine dekadische Größeneinheit niedriger liegen. Das eingetragene Silber wird größtenteils auf dem Rußfilter akkumuliert, kann aber bei hohen Regenerationstemperaturen, die beispielsweise im Bereich von 900 °C liegen, in kleinen Mengen abdampfen. Bei einer vollständigen Sättigung des Abgases mit Silberdampf und einer Regeneration in Intervallen von 1000 km, Regenerationszeiten von 5 Minuten und einem Abgasvolumenstrom von etwa 100 m³/h verdampfen bei einer Fahrleistung von etwa 200000 km etwa 8 g Silber vom Filter. Der Großteil davon resublimiert an kälteren Stellen des Abgasstranges. Die Verwendung von Silber hat den Vorteil, dass es nicht toxisch ist.

Anstatt einer Verdampfung aus einem tiegelartigen Vorratsbehälter kann der Feststoff auch mittels einer modifizierten Glühstiftkerze verdampft werden, auf welcher das zu verdampfende Material aufgebracht ist. Die in den Abgasstrang eingetragene Menge an Additiv wird dann über die Temperatur des Glühstiftes eingestellt, welche abhängig ist von dem an dem Glühstift eingestellten elektrischen Strom.

Wenn das als fertiger Katalysator vorliegende, zu verdampfende Material, das beispielsweise aus Silber gebildet ist, in flüssiger Form vorliegt, kann das zur Erhitzung des Materials erforderliche Heizelement in die Flüssigkeit eintauchen, wobei das Abgas zur Aufnahme des Katalysators über die Flüssigkeitsoberfläche geführt wird.

Um einen hohen Sättigungsgrad an dem von dem Additiv gebildeten Katalysator in dem Abgas zu erreichen, kann das Abgas an der Stelle des Verdampfers beispielsweise mittels statischer Mischer turbulent geführt werden.

Um das Additiv bzw. den Katalysator besser auf dem Rußfilter binden zu können oder um dem Rußfilter eine zusätzliche katalytische Funktion verleihen zu können, kann der Rußfilter mit einem porösen Washcoat überzogen sein, der beispielsweise aus porösen γ-Aluminiumoxid besteht. Der Washcoat kann gegebenenfalls zusätzliche katalytische Stoffe wie Edelmetalle oder Metalloxide, Metallsulfate, Metallcarbonate oder Metallnitrate enthalten.

Um eine möglichst kleine Baugröße der Aufbereitungseinheit und kleine Volumenströme zu erreichen, kann es zweckmäßig sein, das Additiv in reiner Form einzusetzen.

Die Erfindung hat auch ein Verfahren zur Regenerierung eines Rußfilters zum Gegenstand, der in einem Abgasstrang einer Brennkraftmaschine angeordnet ist. Bei dem Verfahren, bei dem ein Additiv eingesetzt wird, das einen Katalysator umfasst, der an dem Rußfilter bei der Regenerierung wirkt, und die Temperatur des Rußfilters erhöht wird, so dass an diesem angelagerte Rußpartikel oxidieren, wird das Additiv oder ein Folgeprodukt desselben an einer Stelle des Abgasstranges eingetragen, die zwischen der Brennkraftmaschine und dem Rußfilter liegt.

Durch Einsatz des Verfahrens nach der Erfindung ist eine brennkraftmaschinenunabhängige Zudosierung eines Katalysators für die Regenerierung des Rußfilters möglich.

Weitere Vorteile und vorteilhafte Ausgestaltungen des Gegenstandes nach der Erfindung sind der Beschreibung, der Zeichnung und den Patentansprüchen entnehmbar.

### Zeichnung

Drei Ausführungsbeispiele eines Abgasstrangs nach der Erfindung sind in der Zeichnung schematisch vereinfacht dargestellt und werden in der nachfolgenden Beschreibung näher erläutert. Es zeigen
Figur 1 einen Abgasstrang mit einer eine Umsetzungseinrichtung aufweisenden Aufbereitungseinheit für ein Additiv;
Figur 2 einen Abgasstrang mit einer ein Dosierventil umfassenden Aufbereitungseinheit für einen katalytisch wirksamen Stoff; und
Figur 3 einen Abgasstrang mit einer Aufbereitungseinheit für einen katalytisch wirksamen Stoff mit einem Verdampfungstiegel.

### Beschreibung der Ausführungsbeispiele

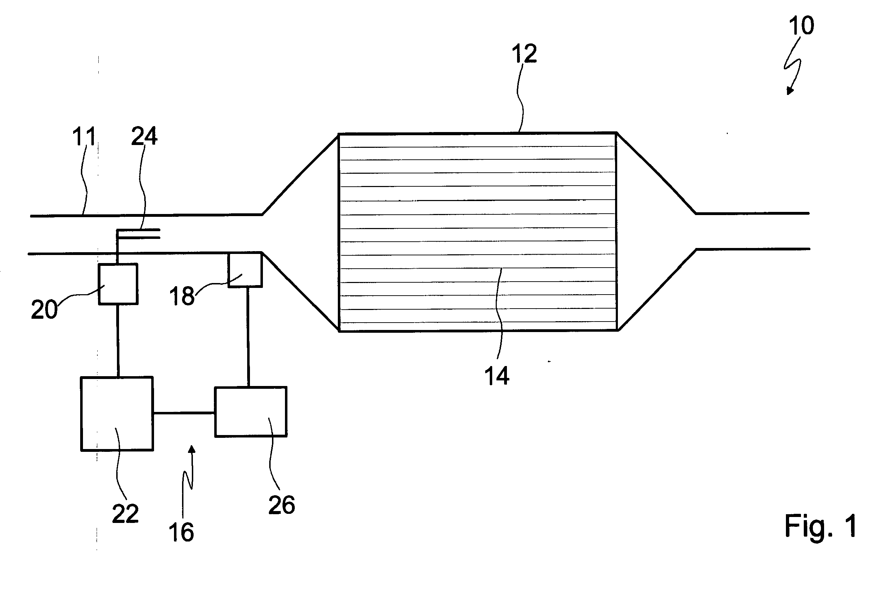

In Figur 1 ist ein Abgasstrang 10 einer ansonsten nicht näher dargestellten Diesel-Brennkraftmaschine eines Personenkraftwagens dargestellt. Der Abgasstrang 10 umfasst ein Abgasrohr 11 und einen Rußfilter 12 mit einer porösen Filterstruktur 14, der zum Abscheiden von Rußpartikeln aus dem in dem Abgasstrang 10 strömenden Abgas dient.

Stromauf des Rußfilters 12 umfasst der Abgasstrang 10 des Weiteren eine Einrichtung 16 zur Regeneration des Rußfilters 12. Die Einheit 16 weist eine Heizeinrichtung 18 auf, mittels der das durch den Abgasstrang strömende Abgas erhitzt werden kann, so dass an dem Rußfilter 12 eine thermische Oxidation des abgelagerten Rußes erfolgen kann.

Stromauf der Heizeinrichtung 18 umfasst die Einrichtung 16 zur Regeneration des Rußfilters eine Aufbereitungseinheit 20 zur Aufbereitung eines aus einem Vorratsbehälter 22 herangeführten, flüssigen Mediums. Das in dem Vorratsbehälter 22 enthaltene flüssige Medium besteht aus einem Gemisch aus Dieselkraftstoff und einem Additiv, das aus Platinatomen besteht, die jeweils durch einen organischen Komplex geschützt sind.

In der Aufbereitungseinrichtung 20, die einen Brenner als Umsetzungseinrichtung umfasst, wird der Kraftstoff verbrannt und das Additiv so umgesetzt, dass der die Platin- atome schützende, organische Komplex zersetzt und die Platinatome über ein Dosierventil 24 in das Abgasrohr 11 eindosierbar sind. Die Platinkerne bzw. -atome lagern sich dort auf den in dem betreffenden Abgas enthaltenen Rußpartikeln an und bilden für die Regeneration des Rußfilters 12 katalytisch aktive Zentren, so dass die zur Regeneration des Rußfilters 12 erforderliche Aktivierungstemperatur, die mittels des Heizers 18 eingestellt wird, verringert ist. Zur Steuerung der Aufbereitungseinheit 20 und der Heizeinrichtung 18 ist eine Steuereinheit 26 vorgesehen, die mit einer elektronischen Motorsteuerung verbunden oder Bestandteil einer solchen ist.

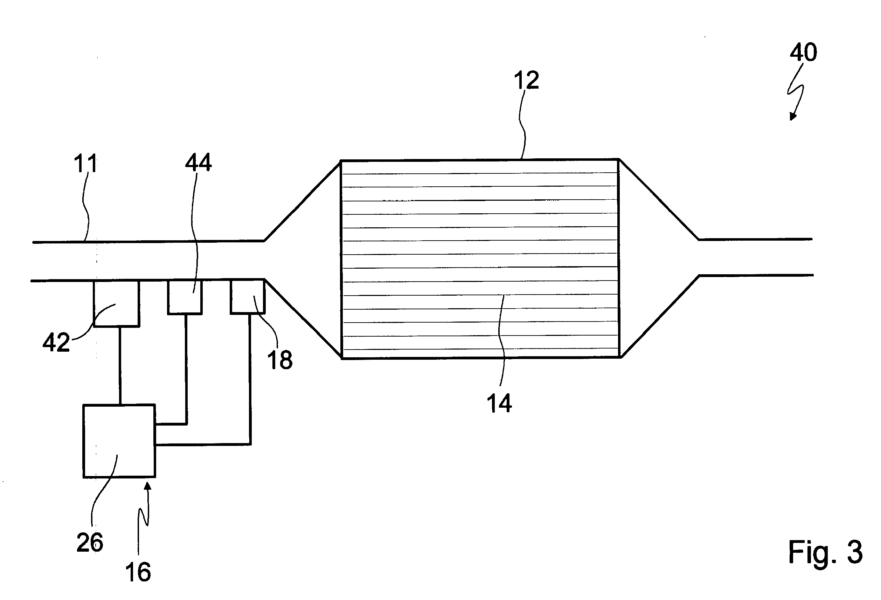

In Figur 3 ist ein Abgasstrang 40 dargestellt, der ebenfalls einen Rußfilter 12 mit einer porösen Rußfilterstruktur 14 aufweist.

Entsprechend den vorstehend beschriebenen Ausführungsbeispielen ist stromab des Rußfilters 12 eine Einrichtung 16 zur Regeneration des Rußfilters 12 angeordnet, die eine Heizeinrichtung 18 für das in dem Abgasstrang 40 strömende Abgas aufweist. Stromab der Heizeinrichtung 18 umfasst die Einrichtung 16 zur Regeneration des Rußfilters 12 einen beheizbaren Tiegel 42, der eine Aufbereitungseinheit darstellt und als Vorratsbehälter für ein Additiv dient, das im vorliegenden Fall aus reinem Silber gebildet ist und einen katalytisch wirksamen Stoff für die Regeneration des Rußfilters 12 darstellt.

Der mit Silber befüllte Tiegel 42 ist mit einer Steuereinheit 26 verbunden, die mit einem Rußsensor 44 zur Messung der Rußkonzentration des in dem Abgasstrang 40 strömenden Abgases und mit der Heizeinrichtung 18 verbunden ist. In Abhängigkeit von der mittels des Rußsensors 44 gemessenen Rußkonzentration wird eine Heizung des Tiegels 42 von der Steuereinheit 26 so angesteuert, dass der Silberdampfdruck über dem Tiegel 42 steigt und Silber in das Abgasrohr 11 eindosiert wird und sich auf den Rußpartikeln des Abgases anlagert. Das auf den Rußpartikeln angelagerte Silber wirkt bei der Regeneration des Rußfilters 12 als katalytisch wirksamer Stoff.

## Patentansprüche

1. Abgasstrang einer Brennkraftmaschine, insbesondere einer Diesel-Brennkraftmaschine, mit einem Russfilter (12) und einer Einrichtung (16) zur Regeneration des Rußfilters (12), **dadurch gekennzeichnet, dass** die Einrichtung (16) zur Regeneration des Rußfilters (12) eine Aufbereitungseinheit (20, 24, 42) umfasst, mittels der ein einen Katalysator für die Regeneration umfassendes Additiv oder ein Umsetzungsprodukt desselben stromab der Brennkraftmaschine und stromauf des Rußfilters (12) in den Abgasstrang eintragbar ist, wobei das den Katalysator umfassende Additiv gasförmig vorliegt.

2. Abgasstrang nach Anspruch 1, **dadurch gekennzeichnet, dass** der Aufbereitungseinheit (20, 24, 42) ein Vorratsbehälter (22, 32, 42) für das Additiv zugeordnet ist.

3. Abgasstrang nach Anspruch 1 oder 2, **dadurch gekennzeichnet, dass** der Aufbereitungseinheit (20, 24) eine Dosiereinrichtung (24) zugeordnet ist.

4. Abgasstrang nach Anspruch 3, **dadurch gekennzeichnet, dass** die Dosiereinrichtung (24) mit einer Steuereinheit (26) verbunden ist.

5. Abgasstrang nach einem der Ansprüche 1 bis 3, **dadurch gekennzeichnet, dass** die Aufbereitungseinheit (20) eine Umsetzungseinrichtung für das den Katalysator umfassende Additiv umfasst.

6. Abgasstrang nach Anspruch 5, **dadurch gekennzeichnet, dass** die Umsetzungseinrichtung (20) einen Brenner oder ein Heizelement umfasst.

7. Abgasstrang nach einem der Ansprüche 1 bis 6, **dadurch gekennzeichnet, dass** die Aufbereitungseinheit (42) mit einem Rußsensor (44) zusammenwirkt.

8. Abgasstrang nach einem der Ansprüche 1 bis 7, **dadurch gekennzeichnet, dass** die Aufbereitungseinrichtung mit einer elektronischen Motorsteuerung zusammenwirkt.

9. Abgasstrang nach einem der Ansprüche 1 bis 8, **dadurch gekennzeichnet, dass** die Aufbereitungseinheit mit einem Filtermanagementsystem zusammenwirkt.

10. Abgasstrang nach einem der Ansprüche 1 bis 9, **dadurch gekennzeichnet, dass** das den Katalysator umfassende Additiv in einem flüssigen Medium enthalten ist.

11. Abgasstrang nach Anspruch 10, **dadurch gekennzeichnet, dass** das flüssige Medium ein wässriges und/oder ein organisches Lösungsmittel ist.

12. Abgasstrang nach Anspruch 10, **dadurch gekennzeichnet, dass** das flüssige Medium ein Brennstoff ist.

13. Abgasstrang nach einem der Ansprüche 1 bis 9, **dadurch gekennzeichnet, dass** das den Katalysator umfassende Additiv gasförmig vorliegt.

14. Abgasstrang nach einem der Ansprüche 1 bis 9, **dadurch gekennzeichnet, dass** das den Katalysator umfassende Additiv als flüssiges Metall vorliegt.

15. Abgasstrang nach einem der Ansprüche 1 bis 15, **dadurch gekennzeichnet, dass** die Aufbereitungseinheit ein Mittel zur turbulenten Führung des Abgases umfasst.

16. Abgasstrang nach einem der Ansprüche 1 bis 16, **dadurch gekennzeichnet, dass** der Rußfilter mit einem porösen Washcoat überzogen ist.

17. Verfahren zur Regenerierung eines Russfilters (12), der in einem Abgasstrang (10, 20, 40) einer Brennkraftmaschine angeordnet ist, umfassend die Schritte
- Einsetzen eines gasförmigen Additivs, das einen Katalysator umfasst, der an dem Rußfilter (12) bei der Regenerierung wirkt;
- Erhöhen der Temperatur des Rußfilters (12), so dass an diesem angelagerte Rußpartikel oxidieren,
wobei das Additiv oder ein Umsetzungsprodukt desselben an einer Stelle in den Abgasstrang (10, 20, 40) eingetragen wird, die zwischen der Brennkraftmaschine und dem Rußfilter (12) liegt.

18. Verfahren nach Anspruch 18, **dadurch gekennzeichnet, dass** das Additiv oder dessen Umsetzungsprodukt kontinuierlich eingetragen wird.

19. Verfahren nach Anspruch 18, **dadurch gekennzeichnet, dass** das Additiv oder dessen Umsetzungsprodukt diskontinuierlich eingetragen wird.

20. Verfahren nach einem der Ansprüche 18 bis 20, **dadurch gekennzeichnet, dass** das Additiv oder dessen Umsetzungsprodukt in Abhängigkeit von einer Rußkonzentration des Abgases eingetragen wird.

21. Verfahren nach einem der Ansprüche 18 bis 21, **dadurch gekennzeichnet, dass** das Additiv oder dessen Umsetzungsprodukt in Abhängigkeit von einem Abgasgegendruck eingetragen wird.

22. Verfahren nach einem der Ansprüche 18 bis 22, **dadurch gekennzeichnet, dass** das Additiv oder dessen Umsetzungsprodukt durch Verdampfung eines Feststoffes in den Abgasstrang eingetragen wird.

23. Verfahren nach einem der Ansprüche 18 bis 22, **dadurch gekennzeichnet, dass** das Additiv oder dessen Umsetzungsprodukt durch Verdampfung einer Flüssigkeit in den Abgasstrang eingetragen wird.

24. Verfahren nach einem der Ansprüche 18 bis 22, **dadurch gekennzeichnet, dass** das Additiv oder dessen Umsetzungsprodukt durch Verbrennung eines Brennstoffes in den Abgasstrang eingetragen wird.

## Claims

1. Exhaust line of an internal combustion engine, in particular of a diesel internal combustion engine, having a soot filter (12) and a device (16) for regenerating the soot filter (12), **characterized in that** the device (16) for regenerating the soot filter (12) comprises a preprocessing unit (20, 24, 42) by means of which an additive which comprises a catalyst for the regeneration or a conversion product thereof can be input into the exhaust line downstream of the internal combustion engine and upstream of the soot filter (12), the additive which comprises the catalyst being present in a gaseous form.

2. Exhaust line according to Claim 1, **characterized in that** the preprocessing unit (20, 24, 42) is assigned a reservoir vessel (22, 32, 42) for the additive.

3. Exhaust line according to Claim 1 or 2, **characterized in that** the preprocessing unit (20, 24) is assigned a metering device (24).

4. Exhaust line according to Claim 3, **characterized in that** the metering unit (24) is connected to a control unit (26).

5. Exhaust line according to one of Claims to 1 to 3, **characterized in that** the preprocessing unit (20) comprises a converter device for the additive which comprises the catalyst.

6. Exhaust line according to Claim 5, **characterized in that** the converter device (20) comprises a burner or a heating element.

7. Exhaust line according to one of Claims 1 to 6, **characterized in that** the preprocessing unit (42) interacts with a soot sensor (44).

8. Exhaust line according to one of Claims 1 to 7, **characterized in that** the preprocessing device interacts with an electronic engine controller.

9. Exhaust line according to one of Claims 1 to 8, **characterized in that** the preprocessing unit interacts with a filter management system.

10. Exhaust line according to one of Claims 1 to 9, **characterized in that** the additive which comprises the catalyst is contained in a fluid medium.

11. Exhaust line according to Claim 10, **characterized in that** the fluid medium is an aqueous solvent and/or an organic solvent.

12. Exhaust line according to Claim 10, **characterized in that** the fluid medium is a fuel.

13. Exhaust line according to one of Claims 1 to 9, **characterized in that** the additive which comprises the catalyst is present in a gaseous form.

14. Exhaust line according to one of Claims 1 to 9, **characterized in that** the additive which comprises the catalyst is present as a liquid metal.

15. Exhaust line according to one of Claims 1 to 14, **characterized in that** the preprocessing unit comprises a means for guiding the exhaust gas in a turbulent fashion.

16. Exhaust line according to one of Claims 1 to 15, **characterized in that** the soot filter is coated with a porous washcoat.

17. Method for regenerating a soot filter (12) which is arranged in an exhaust line (10, 20, 40) of an internal combustion engine, comprising the steps
- use of a gaseous additive which comprises a catalyst which acts on the soot filter (12) during the regeneration;
- increasing of the temperature of the soot filter (12) so that soot particles which are deposited on it oxidize,
the additive or a conversion product thereof being input into the exhaust line (10, 20, 40) at a location between the internal combustion engine and the soot filter (12).

18. Method according to Claim 17, **characterized in that** the additive or a conversion product thereof is input continuously.

19. Method according to Claim 17, **characterized in that** the additive or conversion product thereof is input discontinuously.

20. Method according to one of Claims 17 to 19, **characterized in that** the additive or conversion product thereof is input as a function of a soot concentration in the exhaust gas.

21. Method according to one of Claims 17 to 20, **characterized in that** the additive or conversion product thereof is input as a function of an exhaust gas backpressure.

22. Method according to one of Claims 17 to 21, **characterized in that** the additive or conversion product thereof is input into the exhaust line by vaporizing a solid.

23. Method according to one of Claims 17 to 21, **characterized in that** the additive or conversion product thereof is input into the exhaust line by vaporizing a fluid.

24. Method according to one of Claims 17 to 21, **characterized in that** the additive or conversion product thereof is input into the exhaust line by burning a fuel.

## Revendications

1. Conduite de gaz d'échappement d'un moteur à combustion interne, notamment d'un moteur à combustion interne diesel, comportant un filtre à particules (12) et une installation (16) pour régénérer le filtre à particules (12),
**caractérisée en ce que**
l'installation (16) de régénération du filtre à particules (12) comprend une unité de préparation (20, 24, 42) à l'aide de laquelle on introduit un additif avec un catalyseur pour la régénération ou un produit de transformation de celui-ci dans la conduite des gaz d'échappement, en aval du moteur à combustion interne et en amont du filtre à particules (12), l'additif avec le catalyseur étant à l'état gazeux.

2. Conduite de gaz d'échappement selon la revendication 1,
**caractérisée en ce que**
l'unité de préparation (20, 24, 42) comprend un réservoir d'alimentation (22, 32, 42) pour l'additif.

3. Conduite de gaz d'échappement selon la revendication 1 ou 2,
**caractérisée en ce que**
l'unité de préparation (20, 24) comporte une installation de dosage (24).

4. Conduite de gaz d'échappement selon la revendication 3,
**caractérisée en ce que**
l'installation de dosage (24) est reliée à une unité de commande (26).

5. Conduite de gaz d'échappement selon l'une des revendications 1 à 3,
**caractérisée en ce que**
l'unité de préparation (20) comprend une installation de conversion de l'additif avec le catalyseur.

6. Conduite de gaz d'échappement selon la revendications 5,
**caractérisée en ce que**
l'installation de conversion (20) comprend un brûleur ou un élément chauffant.

7. Conduite de gaz d'échappement selon l'une des revendications 1 à 6,
**caractérisée en ce que**
l'unité de préparation (42) coopère avec un capteur de particules (44).

8. Conduite de gaz d'échappement selon l'une des revendications 1 à 7,
**caractérisée en ce que**
l'installation de préparation coopère avec une commande électronique de moteur.

9. Conduite de gaz d'échappement selon l'une des revendications 1 à 8,
**caractérisée en ce que**
l'unité de préparation coopère avec un système de gestion de filtre.

10. Conduite de gaz d'échappement selon l'une des revendications 1 à 9,
**caractérisée en ce que**
l'additif avec le catalyseur est contenu dans un milieu liquide.

11. Conduite de gaz d'échappement selon la revendication 10,
**caractérisée en ce que**
le milieu liquide est un milieu aqueux et/ou un solvant organique.

12. Conduite de gaz d'échappement selon la revendication 10,
**caractérisée en ce que**
le milieu liquide est un carburant.

13. Conduite de gaz d'échappement selon l'une des revendications 1 à 9,
**caractérisée en ce que**
l'additif avec le catalyseur est à l'état gazeux.

14. Conduite de gaz d'échappement selon l'une des revendications 1 à 9,
**caractérisée en ce que**
l'additif avec le catalyseur est à l'état de métal liquide.

15. Conduite de gaz d'échappement selon l'une des revendications 1 à 14,
**caractérisée en ce que**
l'unité de préparation comprend un moyen pour guider les gaz d'échappement suivant un écoulement turbulent.

16. Conduite de gaz d'échappement selon l'une des revendications 1 à 15,
**caractérisée en ce que**
le filtre à particules est revêtu d'un revêtement poreux rincé.

17. Procédé de régénération d'un filtre à particules (12) installé dans une conduite de gaz d'échappement (10, 20, 40) d'un moteur à combustion interne comprenant les étapes suivante :
- introduction d'un additif gazeux avec un catalyseur agissant sur le filtre à particules (12) pour sa régénération,
- augmentation de la température du filtre à particules (12) pour oxyder les particules de suie accumulées dans le filtre,
l'additif ou le produit de transformation de celui-ci étant apporté à la conduite des gaz d'échappement (10, 20, 40) à un point situé entre le moteur à combustion interne et le filtre à particules (12).

18. Procédé selon la revendication 17,
**caractérisé en ce que**
l'additif ou son produit de transformation est apporté en continu.

19. Procédé selon la revendication 17,
**caractérisé en ce que**
l'additif ou son produit de transformation est apporté de manière discontinue.

20. Procédé selon l'une des revendications 17 à 19,
**caractérisé en ce que**
l'additif ou son produit de transformation est apporté en fonction d'une concentration en particules des gaz d'échappement.

21. Procédé selon l'une des revendications 17 à 20,
**caractérisé en ce que**
l'additif ou son produit de transformation est apporté en fonction de la contre-pression des gaz d'échappement.

22. Procédé selon l'une des revendications 17 à 21,
**caractérisé en ce que**
l'additif ou son produit de transformation est apporté par sublimation de matière solide dans la conduite des gaz d'échappement.

23. Procédé selon l'une des revendications 17 à 21,
**caractérisé en ce que**
l'additif ou son produit de transformation est apporté par évaporation d'un liquide dans la conduite des gaz d'échappement.

24. Procédé selon l'une des revendications 17 à 21,
**caractérisé en ce que**
l'additif ou son produit de transformation est apporté par combustion d'un combustible dans la conduite des gaz d'échappement.
